# FASCICULE DE BREVET EUROPEEN

(11) **EP 0 684 727 B1**
(45) Date de publication et mention de la délivrance du brevet: **10.05.2000**
(21) Numéro de dépôt: 95400279.6
(22) Date de dépôt: 10.02.1995
(51) Int. Cl.: H04N 1/00

(54) **Procédé de programmation à distance de terminaux de communication et système mettant en oeuvre ce procédé**
Verfahren zur Fernprogrammierung von Kommunikationsendgeräten und System zur Durchführung des Verfahrens
Method for remote programming of communication terminals and system for carrying out said method

(30) Priorité: 26.05.1994 FR 9406391
(43) Date de publication de la demande: 29.11.1995
(73) Titulaire: FRANCE TELECOM, 75015 Paris (FR); LA POSTE, 92777 Boulogne Billancourt Cédex (FR)
(72) Inventeur: Le Corre, Hervé, F-14930 Eterville (FR); Hatanian, Soleiman, F-14610 Basly (FR)
(74) Mandataire: Dubois-Chabert, Guy

(56) Documents cités:
- EP-A- 0 552 367
- WO-A-93/25049
- PATENT ABSTRACTS OF JAPAN vol. 18 no. 152 (E-1523) ,14 Mars 1994 & JP-A-05 327952 (SANYO) 10 Décembre 1993,

## Description

### Domaine technique

La présente invention concerne un procédé de programmation à distance de terminaux de communication et un dispositif de mise en oeuvre de ce procédé.

### Etat de la technique antérieure

Dans le domaine des télécommunications, les tranches de tarification horaire permettent de moduler le tarif des communications en fonction de l'heure de transmission choisie.

Pour les terminaux de communication, tels les télécopieurs, l'envoi d'un document, pendant une période creuse se fait actuellement en programmant l'heure choisie pour chaque communication ou par une préprogrammation dans le terminal de ces tranches horaires.

De plus, lors de l'opération de connexion les télécopieurs se communiquent leurs identifiants respectifs.

La programmation et le format de cet identifiant sont actuellement laissés à la discrétion de l'opérateur lors de la première installation. L'identifiant peut à tout moment être modifié ou supprimé. Ceci lui ôte toute pertinence et facteur de confiance que l'on pourrait lui accorder. La mise à jour de l'annuaire national des télécopieurs n'est pas automatique, elle dépend des déclarations effectuées ou non par les détenteurs de terminaux de télécopie.

La présente invention a pour but de donner plus de souplesse à ces différents procédés.

Parmi les documents de l'art connu, on trouve notamment les deux documents suivants.

La demande de brevet WO-A-93 25049 décrit un système de communication capable de réassigner des récepteurs radio. Ce système comprend plusieurs récepteurs radio qui sont assignés à une période prédéterminée de temps parmi un ensemble de telles périodes. Il comprend un émetteur qui émet une information, durant une période de temps prédéterminée, destinée à au moins un récepteur. Un moyen de traitement surveille un niveau de trafic associé avec chaque période de temps déterminée, et un moyen de mesure contrôle un niveau de trafic associé avec au moins un des récepteurs radio sur cette période de temps déterminée. Si ce niveau de trafic est supérieur à un seuil donné pendant cette période de temps, l'émetteur émet un signal de commande à au moins ce récepteur pour le réassigner. Ce récepteur est alors réassigné de la période de temps déterminée à une autre période de temps présentant une valeur de trafic moindre.

Le document « Patent Abstracts of Japan, vol. 18, No. 152 (E-1523) et JP-A-5 327 952 » décrit un équipement fac-similé comprenant une fonction de transmission de réservation de registre d'horloge, dans laquelle un coût de communication est efficacement réduit.

### Exposé de l'invention

L'invention propose un procédé de programmation à distance de terminaux de communication reliés entre eux par le réseau téléphonique, caractérisé en ce qu'il comporte des étapes de radiodiffusion, vers ces terminaux qui sont équipés chacun d'un circuit de réception, d'informations radiodiffusées sur une longueur d'onde déterminée, à partir d'un serveur central via un émetteur hertzien, en ce que une étape de radiodiffusion de l'identifiant d'un terminal donné a lieu lors de la mise sous tension du terminal considéré, et en ce que des étapes de radiodiffusion de données concernant les tranches tarifaires d'émission d'informations sur le réseau téléphonique ont lieu à intervalles de temps réguliers, ces données contenant l'adresse spécifiant le terminal considéré, l'application destinataire et des informations concernant la tranche tarifaire en vigueur.

L'invention concerne également un système de télécommunication mettant en oeuvre le procédé décrit ci-dessus.

Un terminal du système peut émettre une télécopie pendant une tranche horaire choisie, sans que l'utilisateur ait à connaître à priori les heures correspondant à cette tranche et sans que ces heures soient préprogrammés dans le terminal. Il peut comprendre un circuit d'autoprogrammation par communication avec le serveur central de son identifiant lors de sa mise sous tension.

Le terminal peut indiquer à l'utilisateur la tranche de tarification en vigueur.

### Brève description des dessins

- La figure 1 illustre le dispositif de l'invention ;
- la figure 2 illustre schématiquement le fonctionnement d'un terminal local du dispositif de l'invention ;
- la figure 3 illustre le dialogue terminal centre de gestion.

### Exposé détaillé de modes de réalisation

La présente invention concerne un procédé de programmation à distance de terminaux de communication locaux à partir d'un serveur central relié à ces terminaux locaux par exemple par le réseau téléphonique.

Ce procédé est caractérisé par une étape de radiodiffusion de données. Ces données peuvent concerner les tranches de tarification, ou/et l'identifiant d'un terminal local donné.

Dans une étape de radiodiffusion de données concernant les tranches tarifaires, ces données sont radiodiffusées à intervalles de temps réguliers et contiennent, outre l'adresse spécifiant le terminal, l'application destinataire, des informations indiquant la tranche tarifaire en vigueur.

Dans une étape de radiodiffusion de données concernant l'identifiant, ces données sont transmises dès la mise sous tension de chaque terminal local. Elles sont composées d'une chaîne de caractères alphanumériques d'une longueur définie, qui peut être chiffrée ou non. Dans le cas où cette chaîne est chiffrée, la clé du chiffrement est seule connue du terminal et du centre de diffusion des identifiants.

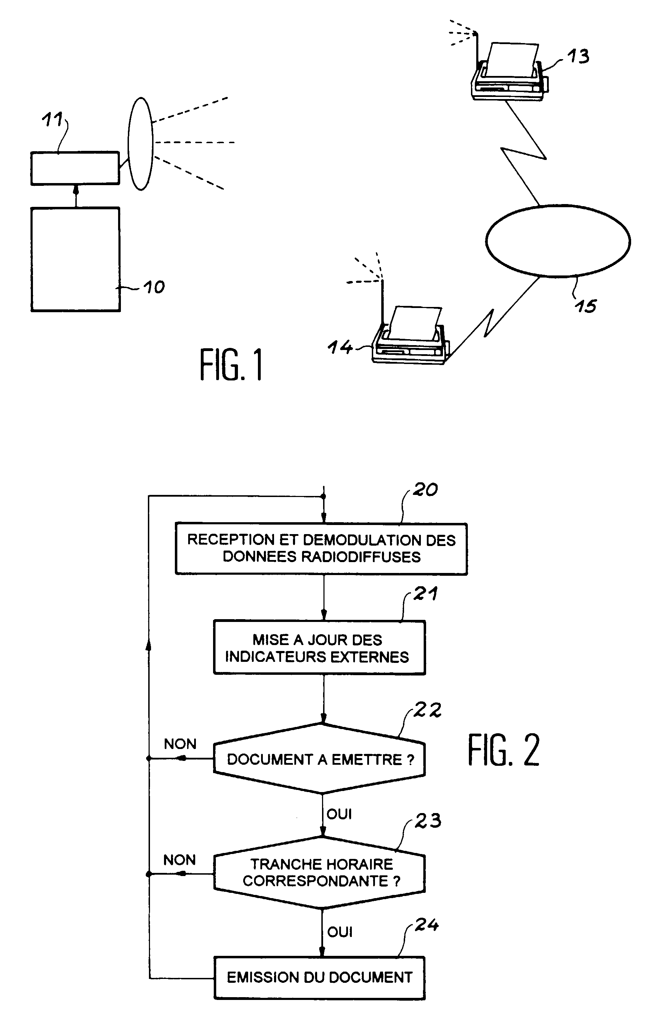

Ainsi sur la figure 1 est représenté un serveur central 10 relié à un émetteur Hertzien 11, et deux terminaux locaux 13 et 14 reliés entre eux par un réseau 15, par exemple le réseau téléphonique.

La figure 2 illustre schématiquement le fonctionnement d'un terminal local. On a ainsi les étapes suivantes :
1) Réception et démodulation des données radiodiffusées par l'émetteur 11 (20).
2) Mise à jour des indicateurs externes (21).
3) Test pour savoir si on doit émettre un document (22).
4) Test pour savoir si le tranche horaire est bien la tranche horaire correspondante (23).
5) Emission du document (24)

Chaque terminal de télécommunication (par exemple télécopieur, téléphone, ...) est équipé d'un circuit électronique de réception et de démodulation des données radiodiffusées sur une longueur d'onde adéquate. Ces données peuvent être des données concernant les tranches tarifaires ou des données concernant l'identifiant.

### Données concernant les tranches tarifaires

L'interprétation des données reçues permettent au terminal de connaître la tranche tarifaire en vigueur. Comme représenté sur la figure 2, lorsqu'un document est en instance d'émission (étape 3 ; référence 22) le terminal compare la tranche tarifaire choisie par l'utilisateur à celle en vigueur (étape 4 ; référence 23) et décide d'émettre (étape 5 ; référence 24) ou non le document.

L'information sur la tranche tarifaire en vigueur peut aussi être communiquée à l'utilisateur, à l'aide par exemple de voyants externes sur le terminal de télécommunication (étape 2 ; référence 21). De cette façon, un utilisateur du terminal peut décider lui-même d'établir ou non une communication.

Au cours de l'étape 4, le terminal doit vérifier si un changement de tranche tarifaire va bientôt avoir lieu, en lisant le bit de donnée diffusé à cet effet. Si tel est le cas le terminal peut décider de ne pas émettre le document et attend la prochaine tranche tarifaire afin de savoir si le taux de réduction est supérieur ou inférieur à celui de la tranche tarifaire choisie par l'émetteur.

Avantageusement, le circuit de réception peut interpréter l'heure et la date radiodiffusée par un procédé semblable et mettre à l'heure automatiquement le télécopieur ; ceci permettant de donner une valeur juridique supérieure à l'heure de réception indiquée par le télécopieur.

### Données concernant l'identifiant

Pour ce mode le système électrique de réception possède en plus un système de mémorisation de son adresse et des informations complémentaires telles que la clé de chiffrement, etc...

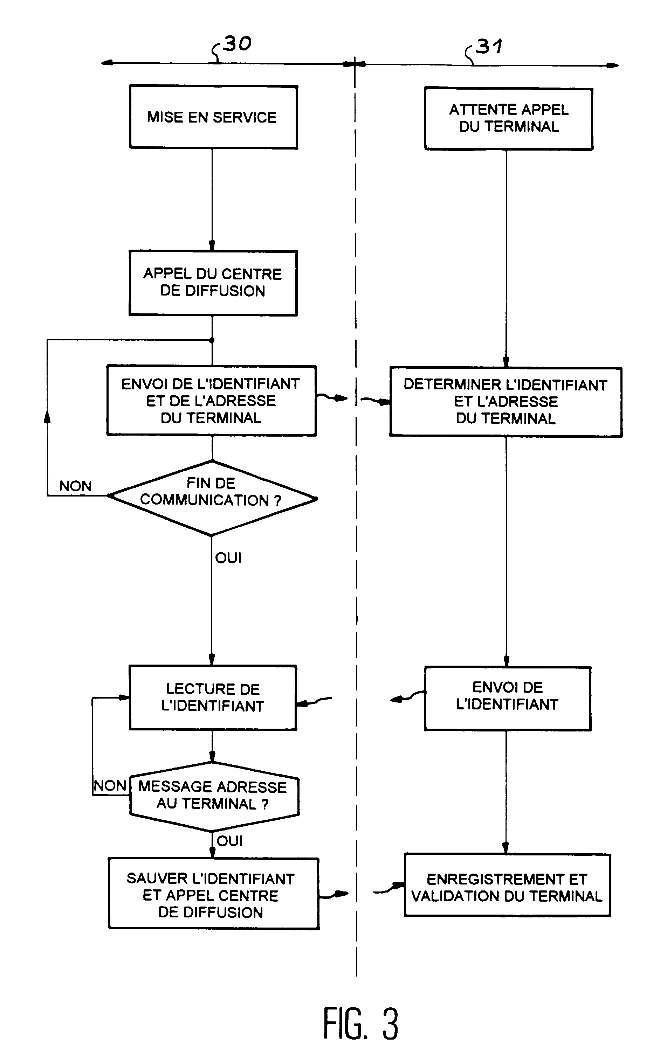

La figure 3 illustre le dialogue terminal (référence 30) - centre de gestion (ou serveur) (référence 31)

A la mise sous tension, le terminal a pour charge de contacter automatiquement (ou par un appel opérateur) le centre de gestion des identifiants pour signaler sa mise en service. Le centre relève alors le numéro d'appel sur lequel le terminal est connecté, (transmis par le canal de signalisation du réseau de communication de l'opérateur), le numéro de série du terminal (transmis par le terminal lui-même, éventuellement chiffré ou numériquement signé) et reconstitue l'identifiant complet et le transmet éventuellement sous forme chiffré, par voie hertzienne. Le terminal se met en attente de son identifiant et confirme sa réception par un second appel au centre de diffusion.

Dès lors cet identifiant sera utilisé à chaque communication avec un autre terminal. De cette manière le terminal distant est sûr de la source d'où émanent les documents ou les signaux reçus. En effet, compte tenu de l'unicité de la source de diffusion des identifiants et de l'impossibilité du détournement des signaux hertziens décrits dans la norme NF/90 002, chaque terminal ainsi identifié l'est de manière unique et sans contestation.

Les avantages d'un tel fonctionnement sont l'autoprogrammation de l'identifiant à chaque remise en service et à chaque changement de la ligne de communication, et en même temps la possibilité de mise à jour automatique et rapide de l'annuaire national.

Grâce au procédé de l'invention chaque terminal n'a plus à être préprogrammé. En y intégrant un circuit électronique permettant de recevoir les ondes radio, le terminal peut s'autoprogrammer pour :

### Les tranches horaires

Le terminal connaît régulièrement la tranche de tarification horaire en vigueur. Ainsi l'utilisateur a juste à choisir la tranche de tarification (par exemple bleue ou rouge), le terminal se chargeant par la suite de transmettre le document lorsqu'il reçoit un code de tranche tarifaire à réduction supérieure ou égale à celle qu'il a choisie.

Ce dispositif permet à l'opérateur de télécommunications d'adapter régulièrement les tranches de tarification à ses besoins et à l'utilisateur d'être certain que la communication aura bien lieu dans la tranche de tarification choisie (même si l'horloge interne du télécopieur n'est pas à l'heure), en même temps qu'une manipulation simplifiée du terminal.

### L'identifiant

Dès la mise sous tension du terminal, le processus d'autoprogrammation de l'identifiant est activé et le résultat de l'opération sauvegardé. L'opérateur n'a ni besoin de programmer ni la possibilité de modifier celui-ci. Dès lors l'ensemble des documents, messages et signaux transmis par le terminal sont clairement identifiés comme émanant de celui-ci et non pas d'un autre.

L'annuaire national peut alors être mis à jour rapidement et de façon sûre.

On va à présent considérer un exemple de mode de réalisation.

Le procédé de transmission s'appuie sur un système de radiodiffusion de données. Avantageusement, le procédé de modulation de données utilisé peut être celui décrit dans la norme française NF/C90 002.

### Tranches horaires de tarification

Les données concernant les tranches tarifaires sont radiodiffusées à intervalles de temps réguliers (par exemple chaque minute) et contiennent, outre l'adresse spécifiant l'application destinataire, des informations indiquant la tranche tarifaire en vigueur. Par exemple :

| | | |
|---|---|---|
| (en binaire) | 1111 | plein tarif |
| | 1110 | tarif réduit de 30 % |
| | 1100 | tarif réduit de 50 % |
| | 1000 | tarif réduit de 60 % |

Dans ce cas, le nombre de "1" indique le niveau de réduction par rapport au tarif plein.

Un élément d'information dans la trame doit permettre de prévenir d'un prochain changement de tranche.

### L'identifiant

L'identifiant est transmis dès l'installation et mise sous tension du terminal. Il est composé d'une chaîne de caractères alphanumériques d'une longueur définie (par exemple 20 octets). Cette dernière peut être chiffré ou non. Dans le cas où cette chaîne est chiffrée, la clé du chiffrement est seule connue du terminal et du centre de diffusion des identifiants.

## Revendications

1. Procédé de programmation à distance de terminaux de communication (13, 14) reliés entre eux par le réseau téléphonique (15), caractérisé en ce qu'il comporte des étapes de radiodiffusion, vers ces terminaux (13, 14) qui sont équipés chacun d'un circuit de réception, d'informations radiodiffusées sur une longueur d'onde déterminée, à partir d'un serveur central (10) via un émetteur hertzien (11), en ce que une étape de radiodiffusion de l'identifiant d'un terminal donné a lieu lors de la mise sous tension du terminal considéré, et en ce que des étapes de radiodiffusion de données concernant les tranches tarifaires d'émission d'informations sur le réseau téléphonique ont lieu à intervalles de temps réguliers, ces données contenant l'adresse spécifiant le terminal considéré, l'application destinataire et des informations concernant la tranche tarifaire en vigueur.

2. Procédé selon la revendication 1, caractérisé en ce que les terminaux sont des télécopieurs.

3. Procédé selon l'une quelconque des revendications précédentes, caractérisé en ce que lors d'une étape de radiodiffusion de données concernant l'identifiant d'un terminal considéré, ces données sont composées d'une chaîne de caractères alphanumériques d'une longueur définie, chiffrée ou non.

4. Système de télécommunication comprenant d'une part un serveur central (10) relié à un émetteur hertzien (11), et d'autre part plusieurs terminaux (13, 14) reliés entre eux par le réseau téléphonique, ce système mettant en oeuvre le procédé selon l'une quelconque des revendications précédentes, caractérisé en ce que chaque terminal comprend un circuit de réception des informations radiodiffusées, permettant à chaque terminal d'être identifié et de connaître la tranche tarifaire en vigueur, chaque terminal comprenant des moyens pour comparer une tranche horaire choisie par l'utilisateur à cette tranche tarifaire en vigueur, et étant adapté à émettre ou non des informations sur le réseau téléphonique en dépendance du résultat de la comparaison.

5. Système selon la revendication 4, caractérisé en ce que chaque terminal comprend un circuit d'émission via le réseau, apte à fonctionner lorsque la tranche tarifaire choisie est la tranche en vigueur.

6. Système selon la revendication 5, caractérisé en ce que les terminaux sont des télécopieurs et en ce que chaque terminal comprend un circuit de comparaison d'une tranche horaire choisie par l'utilisateur avec la tranche en vigueur de manière à émettre une télécopie pendant cette tranche horaire choisie, sans que l'utilisateur ait à connaître a priori les heures correspondant à cette tranche et sans que ces heures soient préprogrammées dans le terminal.

7. Système selon la revendication 4, caractérisé en ce que chaque terminal comprend un circuit pour indiquer à l'utilisateur la tranche de tarification en vigueur.

8. Système selon la revendication 4, caractérisé en ce que chaque terminal comprend un circuit d'autoprogrammation par communication avec le serveur central de son identifiant lors de sa mise sous tension.

## Patentansprüche

1. Verfahren zur Fernprogrammierung von Kommunikations-Terminals (13, 14), die durch das Telefonnetz (15) miteinander verbunden sind,
**dadurch gekennzeichnet**, dass es Schritte der Funkübertragung zu diesen Terminals (13, 14) umfasst, von denen jedes mit einer Empfangsschaltung von Funkinformationen auf einer bestimmten Wellenlänge ausgerüstet ist, die von einem zentralen Server (10) ausgehen, über einen Funksender (11), dass ein Funkübertragungs-Schritt der Kennzeichnung eines bestimmten Terminals bei dem Unterspannungsetzen des betreffenden Terminals stattfindet, und dass Funkübertragungsschritte von Daten bezüglich der Tarifgruppen bzw. -zeitscheiben zum Senden von Informationen über das Telefonnetz in regelmäßigen Zeitintervallen stattfinden, wobei diese Daten die das betreffende Terminal spezifizierende Adresse, die Empfängerapplikation und Informationen bezüglich der geltenden Tarifgruppe bzw. -scheibe enthalten.

2. Verfahren nach Anspruch 1, dadurch gekennzeichnet, dass die Terminals Fernkopierer sind.

3. Verfahren nach einem der vorangehenden Ansprüche, dadurch gekennzeichnet, dass während eines Funkübertragungsschrittes von Daten bezüglich der Kennzeichnung eines betreffenden Terminals diese Daten durch eine alphanumerische Zeichenkette einer definierten Länge, verschlüsselt oder nicht, gebildet werden.

4. Telekommunikationssystem mit einerseits einem zentralen Server (10), der mit einem Funksender (11) verbunden ist, und andererseits mehreren Terminals (13, 14), die untereinander durch das Telefonnetz verbunden sind, wobei dieses System das Verfahren nach einem der vorangehenden Ansprüche anwendet, **dadurch gekennzeichnet**, dass jedes Terminal eine Empfangsschaltung der Funkinformationen umfasst, die ermöglichen, jedes Terminal zu identifizieren und die geltende Tarifgruppe bzw. -scheibe zu kennen, wobei jedes Terminal Einrichtungen zum Vergleichen einer durch den Benutzer gewählten Tarifscheibe mit dieser geltenden Tarifscheibe umfasst und adaptiert ist, in Abhängigkeit von dem Resultat des Vergleichs Informationen bzw. Daten auf dem Telefonnetz zu senden oder nicht zu senden.

5. System nach Anspruch 4, dadurch gekennzeichnet, dass jedes Terminal eine Sendeschaltung über das Netz umfasst, die funktionsfähig ist, wenn die gewählte Tarifscheibe die geltende Scheibe ist.

6. System nach Anspruch 5, dadurch gekennzeichnet, dass die Terminals Fernkopierer sind und dass jedes Terminal eine Schaltung zum Vergleichen einer durch den Benutzer gewählten Zeitscheibe mit der geltenden Scheibe umfasst, um eine Fernkopie während dieser gewählten Zeitscheibe zu senden, ohne dass der Benutzer a priori die Stunden kennen muss, die dieser Scheibe entsprechen und ohne dass diese Stunden in dem Terminal vorprogrammiert sind.

7. System nach Anspruch 4, dadurch gekennzeichnet, dass jedes Terminal eine Schaltung umfasst, um dem Benutzer die geltende Tarifscheibe anzugeben.

8. System nach Anspruch 4, dadurch gekennzeichnet, dass jedes Terminal eine Schaltung zur Selbstprogrammierung seiner Kennzeichnung bei seiner Unterspannungssetzung durch Kommunikation mit dem zentralen Server umfasst.

## Claims

1. Process for the remote programming of communications terminals (13, 14) which are interconnected by the telephone network (15), characterized in that it comprises stages of broadcasting to said terminals (13, 14), each of which is equipped with a reception circuit, information broadcast on a given wavelength, from a central server (10) via a microwave transmitter (11), in that a stage of broadcasting the identifier of a given terminal takes place during the switching on of the terminal in question and in that stages of broadcasting data concerning the information transmission time charge bands on the telephone network take place at regular time intervals, said data relating to the address specifying the terminal in question, the destination application and information concerning the time charge band in force.

2. Process according to claim 1, characterized in that the terminals are telefax machines.

3. Process according to any one of the preceding claims, characterized in that during a stage of broadcasting data concerning the identifier of a given terminal, said data consist of a chain of alphanumeric characters of a given length, which may or may not be ciphered.

4. Telecommunications system comprising on the one hand a central server (10) connected to a microwave transmitter (11) and on the other several terminals (13, 14) interconnected by the telephone network, said system performing the process according to any one of the preceding claims, characterized in that each terminal comprises a reception circuit for the broadcast information, enabling each terminal to be identified and to know the time charge band in force, each terminal comprising means for comparing a time charge band chosen by the user with the time charge band in force and being able to transmit or not information on the telephone network as a function of the result of the comparison.

5. System according to claim 4, characterized in that each terminal comprises a transmission circuit via the network able to function when the chosen time charge band is the band in force.

6. System according to claim 5, characterized in that the terminals are telefax machines and in that each terminal comprises a circuit for comparing a time charge band chosen by the user with the band in force, so as to transmit a telefax during said chosen time charge band, without the user a priori knowing the times corresponding to said band and without said times being preprogrammed into the terminal.

7. System according to claim 4, characterized in that each terminal comprises a circuit for indicating to the user the time charge band in force.

8. System according to claim 4, characterized in that each terminal comprises an autoprogramming circuit by communication with the central server of its identifier during its switching on.
